# EUROPÄISCHE PATENTSCHRIFT

(11) **EP 1 721 516 B1**
(45) Veröffentlichungstag und Bekanntmachung des Hinweises auf die Patenterteilung: **02.01.2008**
(21) Anmeldenummer: 06009620.3
(22) Anmeldetag: 10.05.2006
(51) Int. Cl.: A01F 25/13

(54) **Vorrichtung für einen Siloverschluss**
Device for closing a silo
Dispositif de fermeture pour silo

(30) Priorität: 12.05.2005 DE 102005021980; 15.06.2005 DE 102005027500
(43) Veröffentlichungstag der Anmeldung: 15.11.2006
(73) Patentinhaber: Böck, Klaus, 83308 Trostberg (DE)
(72) Erfinder: Böck, Klaus, 83308 Trostberg (DE); Straus, Martin, 74821 Mosbach (DE); Straus, Reinhold, 74821 Mosbach (DE)
(74) Vertreter: Gähr, Hans-Dieter

(56) Entgegenhaltungen:
- EP-A- 0 089 696
- CH-A- 491 590
- DE-A1- 1 582 640
- FR-A- 1 525 772
- FR-A- 2 813 495
- JEAN-MICHEL VOCORET: L¹LEVEUR LAITIER, Nr. 125, 3. Mai 2005 (2005-05-03), Seite 60, XP002395867

## Beschreibung

Die Erfindung betrifft eine Vorrichtung für einen Siloverschluss nach dem Oberbegriff des Anspruches 1.

In der Landwirtschaftstechnik sind die unterschiedlichsten Silo-Typen, beispielsweise Flachsilos, Futtersilos, Foliensilos, Folienflachsilos, etc. bekannt. Bei derartigen Silos sollen beispielsweise Futtermittel ähnlich wie bei der Sauerkrautherstellung in einem luftdicht abgeschlossenen Raum vergoren werden, wobei der Sauerstoff verbraucht und zu CO² abgebaut wird. Hierfür kommen beispielsweise Gras, Mais, Zuckerrüben etc. in Betracht, also im Prinzip alles, was einen Grünmasseanteil aufweist.

Um den luftdichten Abschluss zum Vergären des Futterstockes zu gewährleisten, wird in der Praxis insbesondere bei sogenannten Flachsilos eine Abdeckung in der Regel in Form einer Folie über den Futterstock gelegt und an ihrem umlaufenden Rand am Boden oder an einer Seitenwand des Silos beschwert. Abgefahrene Gummireifen von Kraftfahrzeugen als derartige Beschwerungsmittel sind hinlänglich bekannt. Auch abgelegte schwere Gummimatten aus Förderanlagen werden eingesetzt.

Als preiswertes Beschwerungsmittel haben sich auch Sandsäcke erwiesen, insbesondere schmale, möglichst lange Kunststoffsäcke. Derartige Beschwerungssäcke, die sich in der Praxis durchaus bewährt haben, sind allgemein bekannt. Diese Silosäcke wiegen zwischen 15 kg und 18 kg pro Sack und müssen zur hermetischen Abdichtung des Silos eng aneinander gereiht werden. Bei einer Silogröße von beispielsweise 30 m x 8 m müssen daher 1,4 t bis 1,8 t von Hand bewegt werden, um das Silo abzudecken.

Ebenfalls bekannt ist das sogenannte Drei-Folien-Prinzip: Dabei wird als erste Folie auf den Silagestock eine nur 0,04 mm dicke PE-Folie gelegt. Diese Folie verklebt sich sozusagen durch den Adhäsionseffekt mit der Oberfläche des Silagestocks. Durch die Verklebung kann sich diese Folie nicht wie eine Luftpumpe über dem Silagestock bewegen und dadurch permanent Sauerstoff auf den Silagestock pumpen und damit Fehlgärungen verursachen. Als zweite Folie, die sogenannte Silofolie, wird eine dauerhafte, UV-stabilisierte Polyäthylen-Folie eingesetzt, die für mindestens ein Jahr eine stabile und wasserdichte Oberfläche schafft. Als dritte Folie, die sogenannte Seitenfolie, wird eine PE-Folie, die auch transparent oder eine Altfolie sein kann, eingesetzt. Diese Folie schützt die Seitenwände der Beton-Siloanlagen vor den aggressiven Gärsäuren sowie den Silagestock vor einem seitlichen Luftzutritt auf Grund eventuell undichter Betonwände.

Durch die deutsche Patentschrift DE 3839072 C2 ist eine Vorrichtung für einen Siloverschluss bekannt, die einfacher handhabbarer und preiswerter sein soll, als die üblichen Beschwerungsmittel wie Autoreifen, Sandsäcke und dergl. Die Vorrichtung besteht aus einem Silage- bzw. Stockhäring mit einem zumindest mittelbar auf die Abdeckung, mit der der Silagestock abgedeckt wird, drückenden Klemmelement. Durch die genannte DE 3839072 C2 ist es weiterhin bekannt, dass das Klemmelement nicht selbst direkt auf die in Form einer Folie ausgebildete Abdeckung des Silagestocks, sondern mittelbar über ein Rohr wirkt. Das Rohr kann parallel zur Seitenwand des Silos verlegt werden, wobei die Abdeckplane um das Rohr herum gelegt und durch einen längs der Silowand in den Silagestock eingetriebenen Silohäring fest auf den Silagestock gedrückt wird.

Mit allen bisher bekannten Vorrichtungen für Siloverschlüsse konnte jedoch nicht verhindert werden, dass es bei hohen Windgeschwindigkeiten zur kompletten Abdeckung von Gärfutter-Silos kam. Bei den zunehmend auftretenden Sturmwetterlagen können die eingesetzten Folien mit den bekannten Vorrichtungen nicht in allen Fällen vor einem Abheben durch die durch den Wind entstehenden Sogkräfte geschützt werden.

In der Zeitschrift L'ELEVEUR LAITIER No. 125 MAI 2005 Seite 60 ist eine Vorrichtung für einen Siloverschluss gezeigt und beschrieben, bei der das aus der DE 3839072 C2 bekannte, parallel zur Seitenwand des Silos verlegte Anpresselement als doppelte Druckschiene ausgebildet ist. Diese Druckschiene wird durch mehrere mit Druckverteilschienen versehene Druckstäbe nach unten gedrückt. Die Druckstäbe sind jeweils in einer senkrechten, als Ratsche ausgebildeten Gleitschiene geführt und werden durch eine Wendelfeder nach unten gezogen. Die Gleitschienen sind an kranartigen Armen befestigt, die in einer Wandschiene geführt sind, die auf der Oberseite der Silowand angebracht ist. Diese aufwändige Konstruktion dient zwar dem angestrebten Zweck, ist jedoch auf Grund der Vielzahl der Einzelelemente kompliziert, teuer und unwirtschaftlich.

Aufgabe der vorliegenden Erfindung ist es, eine mit wenigen Einzelteilen einfach handhabbare, preiswerte Vorrichtung zu schaffen, mit der ein Silagestock bei Bedarf oben und auf allen Seiten luftdicht und wasserdicht abgedeckt werden kann und die gesamte Abdeckung den Sogkräften des Windes Widerstand bietet.

Erfindungsgemäß wird dies durch die im kennzeichnenden Teil des Anspruches 1 angegebenen Merkmale gelöst.

Weitere vorteilhafte Ausgestaltungen der Erfindung sind in den Unteransprüchen angegeben.

Durch die vorliegende Erfindung wird eine äußerst einfach handhabbare Vorrichtung geschaffen, mittels derer ein Silagestock luftdicht und sturmsicher abgeschlossen werden kann.

Die Erfindung wird nachfolgend anhand der Ausführungsbeispiele und der Zeichnungen eingehend erläutert. Es zeigen:
Fig. 1: einen Teil eines Flachsilos mit verschiedenen Abdeckelementen, vertikal aufgeschnitten in verkleinerter schematischer Darstellung;
Fig. 2: einen Abschnitt der Innenseite einer Silowand, in verkleinerter schematischer Darstellung;
Fig. 3: den oberen Teil einer Silo-Innenwand mit zwei paarweise fixierten Federelementen, in verkleinerter schematischer Darstellung, von der Seite gesehen;
Fig. 4: den oberen Teil einer Silo-Außenwand mit einem in die Betonwand eingeklebten Bügel;
Fig. 5: ein als Doppelschenkelfeder mit außenliegenden Füßen ausgebildetes Federelement, von oben gesehen;
Fig. 6: ein als Doppelschenkelfeder mit innenliegenden Füßen ausgebildetes Federelement, von oben gesehen;
Fig. 7: die Füße einer Doppelschenkelfeder und einen Bügel, von oben gesehen;
Fig. 8:die Füße einer Doppelschenkelfeder hinter einem Bügel eingerastet, von oben gesehen;
Fig. 9: einen als Rippenstab ausgebildeten Druckstab;
Fig. 10: den oberen Teil einer Silo-Außenwand mit einer Doppelschenkelfeder und einem Druckstab, in unterschiedlichen Positionen, von der Seite gesehen;
Fig. 11: den oberen Teil einer Silo-Außenwand mit einer Doppelschenkelfeder und einem Druckstab, vor und nach der Setzung des Silagestockes, von der Seite gesehen;
Fig. 12: eine aus Bandstahl gefertigte Spannfeder, von oben gesehen;
Fig. 13: eine Spannfeder, die mittels eines Bügels (vgl. Detail A) an einem glatten Druckstab fixiert ist, von der Seite gesehen;
Fig. 14: eine Spannfeder, die mittels einer Scheibe (vgl. Detail B) an einem glatten Druckstab fixiert ist, von der Seite gesehen;
Fig. 15: das Oberteil einer Silowand mit einem starren Arm, an dem eine Wendelfeder anliegt, die mittels eines Verschiebe- und Feststellgliedes an einem Druckstab fixiert ist, von der Seite gesehen;
Fig. 16: das Oberteil einer Silowand mit einem starren Arm, an dem eine Wendelfeder anliegt, die mittels eines Bügels an einem Druckstab selbsthemmend fixiert ist, von der Seite gesehen;
Fig. 17: das Oberteil einer Silowand, an der eine Biege- und Torsionsfeder befestigt ist, die mittels eines Verschiebe- und Feststellgliedes an einem Druckstab fixiert ist, von der Seite gesehen;
Fig. 18: das Oberteil einer Silowand, an der eine Bandfeder befestigt ist, die mittels eines Verschiebe- und Feststellgliedes an einem Druckstab fixiert ist, von der Seite gesehen.

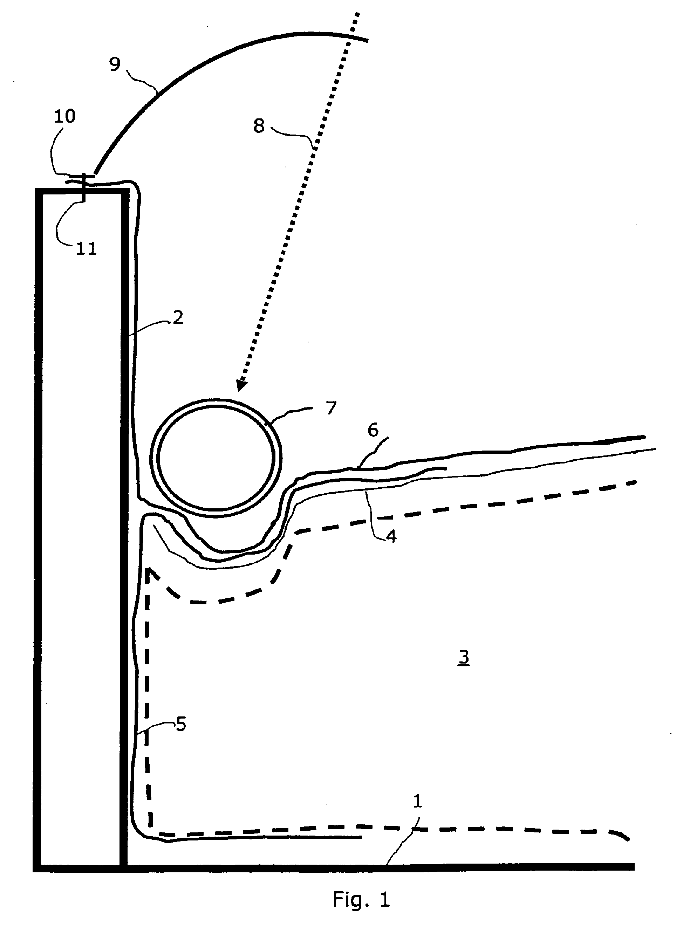

In Fig. 1 ist in schematischer Darstellung ein Flachfolien-Silo 1 gezeigt, das in Draufsicht Rechteckform aufweisen kann. Zwischen den Silo-Innenwänden 2 ist ein Silagestock 3 eingebracht, der aus Grünmassen enthaltenden, luftdicht zu vergärenden landwirtschaftlichen Anbauprodukten besteht. Der Silagestock 3 ist mit einer Unterfolie 4 abgedeckt und seitlich in eine Seitenfolie 5 eingeschlagen. Diese Folie schützt die Seitenwände der Beton-Siloanlagen vor den aggressiven Gärsäuren sowie den Silagestock vor einem seitlichen Luftzutritt auf Grund eventuell undichter Betonwände. Als drittes Abdeck- oder Schutzelement ist eine Silofolie 6 oder ein Siloschutzgitter oben auf den Silagestock 3 gelegt.

Unmittelbar längs der Silo-Innenwand 2 ist auf den die Abdeckung bildenden drei Folien 4, 5, 6 ein der Längsverteilung der Druckkräfte dienendes Anpresselement 7 verlegt. Das Anpresselement 7 besteht im dargestellten Ausführungsbeispiel aus einem Rohr, insbesondere Kunststoff-Rohr, vorzugsweise aus einem PE-Rohr. Als Alternative kann jedoch auch ein Stab runden Querschnittes, vorzugsweise ein Holzstab, verwendet werden.

Das Anpresselement 7 wird durch Druckstäbe 8 so nach unten gedrückt, dass dieses mit einer Kraftkomponente auf den Silagestock 3 und mit einer weiteren Kraftkomponente in Richtung der Silo-Innenwand 2 angepresst wird. Die Druckstäbe 8 sind in Federelemente 9 eingesetzt, die beim Einsetzen der Druckstäbe 8 manuell nach oben vorgespannt werden und somit eine nach unten gerichtete Kraft ausüben. Als Federelemente 9 kommen Flachfedern, Schenkelfedern, Doppelschenkelfedern, Federstäbe oder andere Federn in Frage. Die Druckstäbe 8 sind als Rippenstäbe ausgebildet und in unterschiedlichen Längspositionen in die Federelemente 9 einsetzbar und selbsthemmend festklemmbar. Am unteren Ende des Druckstabes 8 ist eine dem Umfangsprofil des Anpresselementes 7 annähernd angepasste Sattelscheibe (nicht dargestellt) angebracht, die den Druck auf das Anpresselement 7 gleichmäßig überträgt. Die Sattelscheibe kann starr, beweglich oder auch lose mit dem Druckstab 8 verbunden sein.

Die Federelemente 9 sind mit ihren Füßen 10 in Metallbügel 11 kippsicher eingespannt, die auf der Oberseite der Silowände eingeklebt sind. Die oberste Lage der Abdeckung, die Silofolie 6 bzw. das Siloschutzgitter, ist mit dem parallel zur Silo-Innenwand 2 verlaufenden Rand hinter dem Anpresselement 7 an der Silo-Innenwand 2 hochgezogen und über die Bügel 11 gelegt. Beim Einsetzen der Federelemente 9 in die Bügel 11 wird die Folie 6 mit den Füßen 10 der Federelemente 9 durchstochen und somit an den Bügeln 11 fixiert.

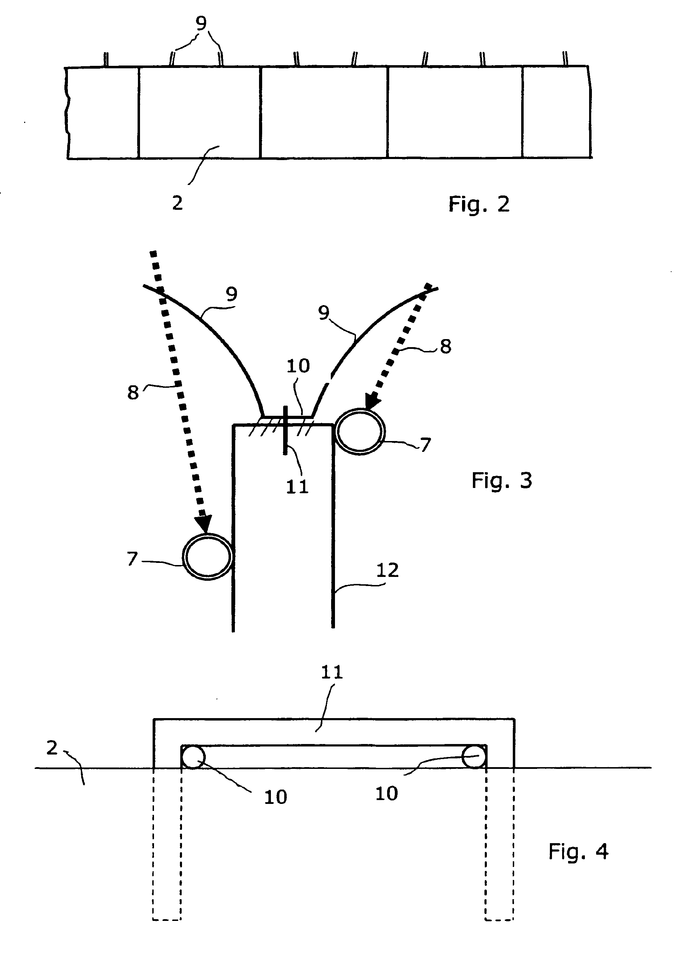

In Fig. 2 ist ein Abschnitt einer Silo-Wand 2 dargestellt, die aus mehreren Betonsegmenten besteht, auf deren Oberseite Federelemente 9 eingespannt sind.

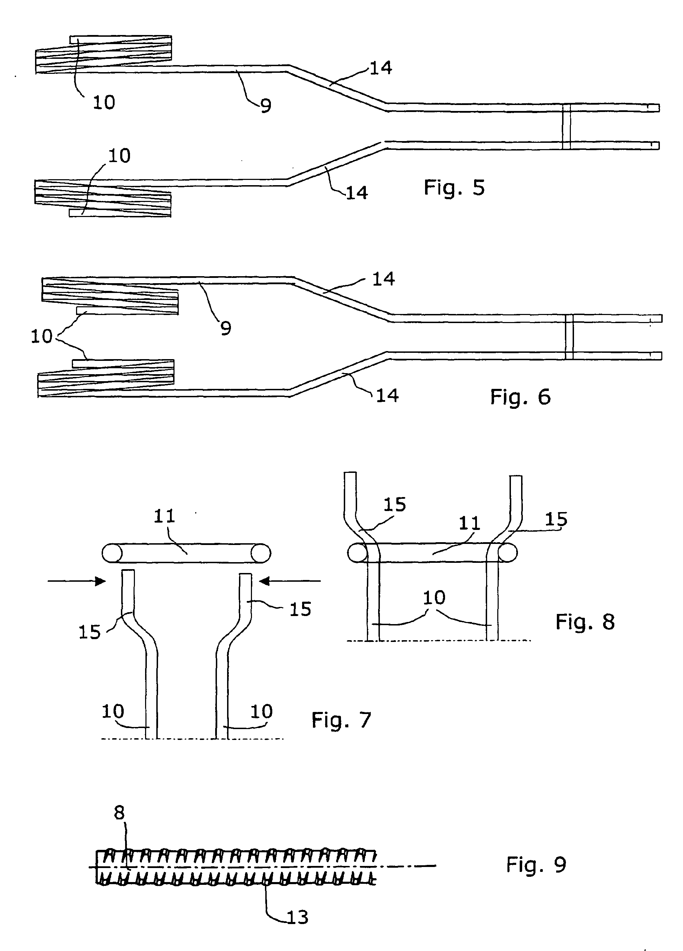

Fig. 3 zeigt den oberen Teil einer Silo-Zwischenwand 12. Auf ihrer Oberseite sind zwei Federelemente 9 paarweise so an einem Metallbügel 11 kippsicher eingespannt, dass jedes der Federelemente 9 in eine angrenzende Kammer des Silos hineinragt. Der Metallbügel 11 ist auf der oberen Stirnseite der Silo-Zwischenwand 12 eingeklebt oder mittels Dübeln befestigt. Die Federelemente 9 werden manuell vorgespannt, bevor an ihren freien Enden jeweils ein Druckstab 8 eingesetzt wird, der mit seinem unteren Ende auf ein rohrförmiges Anpresselement 7 drückt. Die Druckstäbe 8 sind als Rippenstäbe mit auf zwei gegenüberliegenden Längsseiten angebrachten Rippen (13, Fig. 9) ausgebildet und können in unterschiedlichen Längspositionen in die Federelemente 9 eingesetzt und durch Drehen um 90 Grad um ihre Längsachse selbsthemmend fixiert werden. Falls die Länge des Druckstabes 8 nicht ausreicht, weil der Füllstand im Silo zu niedrig ist, wird - wie Fig. 3 deutlich macht - mit verschieden langen Druckstäben 8 gearbeitet. Somit kann eine gleichbleibende Kraft auf die Anpresselemente 7 ausgeübt werden.

In Fig. 4 ist der obere Teil einer Silo-Wand 2 dargestellt. Auf der oberen Stirnseite der Betonwand ist ein Bügel 11 eingeklebt. Der Abstand des waagerechten Querteiles des Bügels 11 von der Oberseite der Silo-Wand 2 ist so bemessen, dass zwischen dem Bügel 11 und der Stirnseite der Silo-Wand 2 die Füße 10 eines Federelementes 9 eingeschoben werden können und kippsicher und selbsthemmend einrasten.

Fig. 5 zeigt ein Federelement 9, das als Doppelschenkelfeder mit außenliegenden Füßen 10 ausgebildet ist. Fig. 6 zeigt ein Federelement 9, das als Doppelschenkelfeder mit innenliegenden Füßen 10 ausgebildet ist. Die Federarme 14 der Doppelschenkelfedern sind jeweils so weit nach innen abgewinkelt, dass sie so eng bei einander stehen, dass die zwischen ihnen eingeführten Druckstäbe (nicht dargestellt) vor dem Spannen der Federelemente 9 vorläufig gehalten werden und nicht nach der Seite des Silostockes kippen oder heraus fallen können. Die Federarme 14 bilden eine Gabel, in der der Druckstab horizontal fixiert wird.

In den Fig. 7 und 8 ist das Einfügen der Federelemente mit ihren Füßen 10 in die Bügel 11 dargestellt. Die Füße 10 der Doppelschenkelfedern weisen jeweils eine Abkröpfung 15 auf. Bei der Montage der Federelemente werden die Füße 10 gegeneinander zusammengedrückt und unter die Bügel 11 gesteckt, so dass sie mit ihren Abkröpfungen 15 hinter den Bügeln 11 einrasten.

In Fig. 9 ist ein Druckstab 8 dargestellt, der auf zwei gegenüber liegenden Längsseiten mit Rippen 13 versehen ist. Der Druckstab 8 ist durch seine glatten Längsseiten zwischen den Armen des Federelementes längs verschiebbar und durch Drehen um 90 Grad um seine Längsachse selbsthemmend fixierbar.

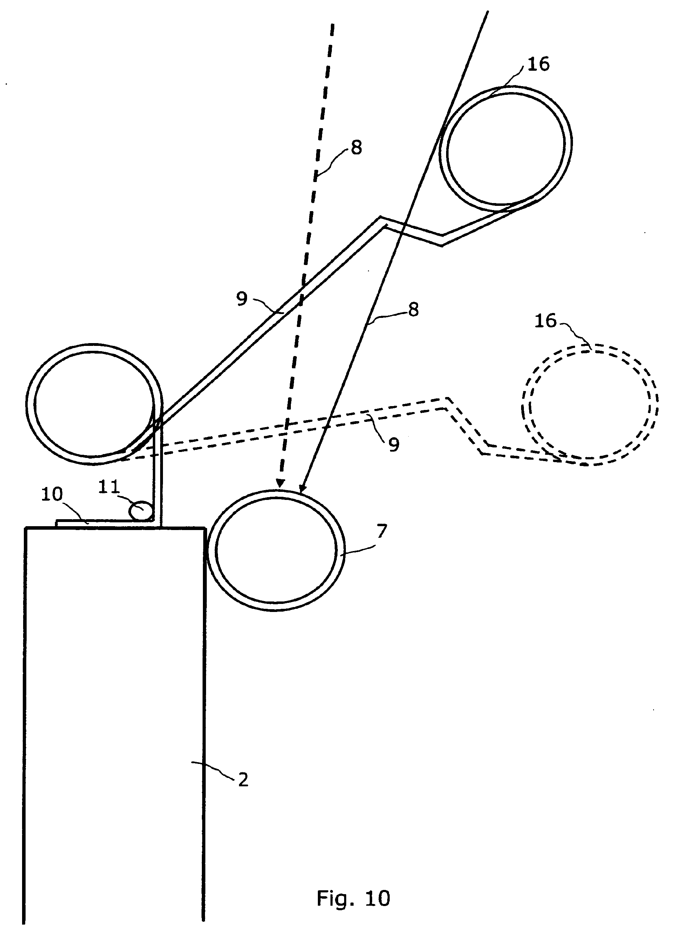

Die Fig. 10 zeigt den oberen Teil einer Silo-Außenwand 2 mit einem als Doppelschenkelfeder ausgebildeten Federelement 9 und einem Druckstab 8, der ein rohrförmiges Anpresselement 7 auf den Silagestock drückt. Die Doppelschenkelfeder ist mit ihren Füßen 10 unter einem Bügel 11 eingerastet und fixiert, der auf der Oberseite der Silo-Außenwand 2 durch Kleben oder Dübeln befestigt ist. Die gestrichelt dargestellte Position zeigt das Federelement 9 im entspannten Zustand mit dem auf das Anpresselement 7 aufgesetzten Druckstab 8. Der zwischen den Armen der Doppelschenkelfeder eingeführte Druckstab 8 wird vor dem Spannen der Feder vorläufig gehalten und kann nicht nach der Seite des Silostockes kippen oder heraus fallen. Die Doppelschenkelfeder hat an ihrem freien Ende eine Schlaufe 16 und kann damit mit der Hand hochgezogen werden. Die Schlaufe 16 ist nach oben gebogen, um bei einem unbeabsichtigten Rückstellen des Federelementes 9 die Silofolie nicht zu verletzen oder zu durchlöchern. Auch im Ruhezustand bleibt zwischen der Betonwand und der Feder ein ausreichend großer Abstand bestehen, um ein Einklemmen der Hand bei einem unbeabsichtigten Zurückschnappen der Feder zu vermeiden. Die mit Vollstrichen gezeichnete Position zeigt das gespannte Federelement 9 mit eingesetztem und fixiertem Druckstab 8.

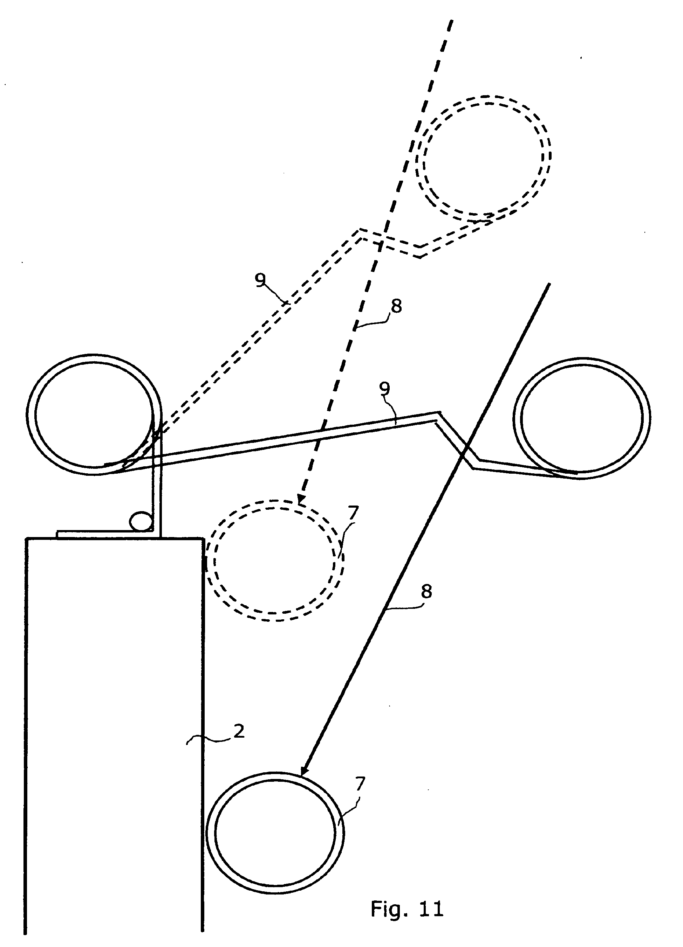

In Fig. 11 sind ebenfalls zwei Positionen des Federelementes 9, des Druckstabes 8 und des Anpresselementes 7 dargestellt. Die gestrichelt gezeichnete Position zeigt die Stellung der genannten Teile nach dem randvollen Befüllen des Silos. Beim Beginn der Silierung ist eine größere Kraftkomponente nach unten erwünscht. Das vollständig gespannte Federelement 9 drückt daher in dieser Stellung mit einer größeren Kraftkomponente über den Druckstab 8 und das Anpresselement 7 auf den Silagestock, um den Setzungsvorgang zu beschleunigen. Die mit Vollstrichen gezeichnete Position zeigt die Teile nach der Setzung und Absenkung des Silagestockes. In dieser Stellung übt der Druckstab 8 eine größere Kraftkomponente zur Silowand 2 hin aus.

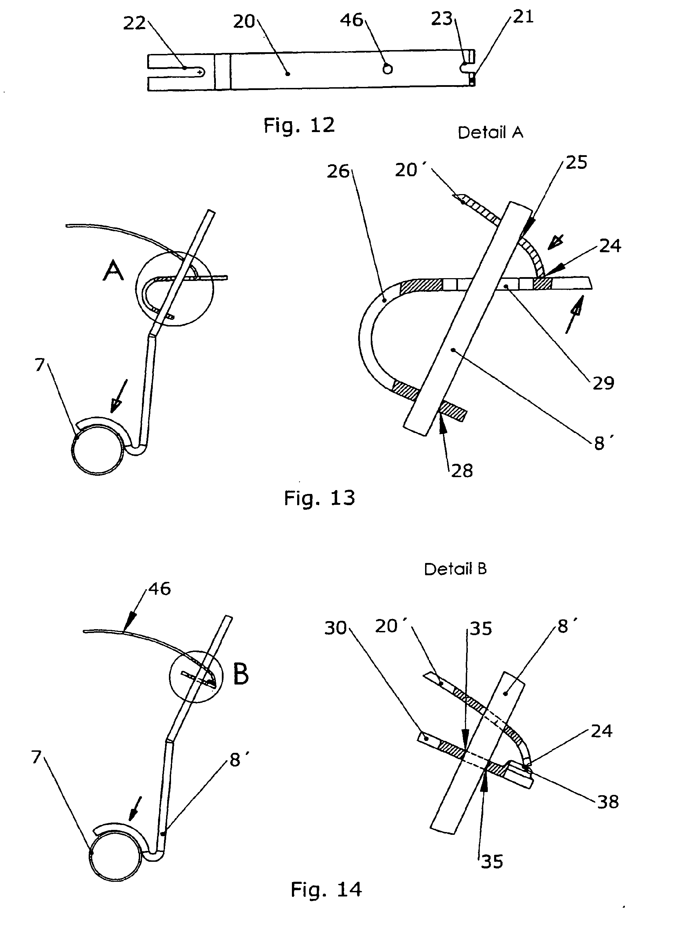

Fig. 12 zeigt eine Spannfeder 20, die aus Bandstahl gefertigt ist und an einem Ende mit einem Schlitz 22 oder einem Langloch versehen ist. Mit diesem Ende (in der Zeichnung links) wird die Spannfeder auf der Oberseite der Silowand entweder einzeln oder wie anhand von Fig. 3 beschrieben paarweise mittels Schrauben oder Dübel befestigt, wobei die Feststellposition im Rahmen des Schlitz- oder Langlochbereiches beliebig verschoben werden kann. Am freien, federnden Ende der Spannfeder 20 ist ebenfalls ein Schlitz 23 vorgesehen, in den der Druckstab (nicht dargestellt) eingeführt wird. Eine zusätzliche Biegung 21 am freien Ende der Spannfeder 20 verhindert, dass sich der Druckstab bei entsprechenden Kraftkomponenten beim Einbau in den verschiedensten Wirkpositionen ausklinken kann. Eine oder mehrere Bohrungen 46 entlang der Mittelachse der Spannfeder 20 ermöglichen weitere Einstellungen der Spannfeder 20 bzw. des Druckstabes.

In Fig. 13 ist eine Spannfeder 20' dargestellt, die mittels eines Bügels 26 (vgl. Detail A) an einem glatten Druckstab 8' fixiert ist. Der rippenlose Druckstab 8' kann kostengünstig aus einem Stück mit einem Biegeautomaten gefertigt werden. Im dargestellten Ausführungsbeispiel ist der Druckstab 8' abgekröpft und an seinem der Abdeckung des Silagestocks zugewandten Ende mit einer dem Umfangsprofil des Anpresselementes 7 angepassten Biegung versehen. Der Druckstab 8' ist in eine Bohrungen 28 und ein Langloch 29 des Bügels 26 eingeführt. Zum Einbau wird der Bügel 26 in Pfeilrichtung bewegt. Auf Grund der Krafteinleitung lösen sich die Kanten an der Bohrung 28, was eine Verschiebung bis zum gewünschten Kraftpunkt ermöglicht. Beim Loslassen des Bügels 26 kippt dieser wieder in die gegenläufige Kraftrichtung zurück und verkantet sich selbsthemmend über die Kanten der Bohrung 28. Die Kraft der Spannfeder 20' wirkt dann über ihr freies Ende 24 auf den Bügel 26 und über die Kanten seiner Bohrung 28 auf den Druckstab 8'.

Fig. 14 zeigt eine Spannfeder 20', die mittels einer Scheibe 30 (vgl. Detail B) an einem glatten Druckstab 8' fixiert ist. Durch das Anheben der Scheibe 30 wird der Kraftschluss über die Kanten der Bohrung 35 aufgehoben, was ein Verschieben und Spannen der Spannfeder 20' ermöglicht. Nach dem Loslassen der Scheibe 30 fließt die Rückstellkraft einseitig über das freie Ende 24 der Spannfeder 20' auf die Scheibe 30 zurück, was zu einer Verkantung innerhalb der Bohrung 35 führt und den Druckstab 8' selbsthemmend fixiert. Durch Auftragen einer erhöhten Auflage 38 auf die Scheibe 30 kann dieser Effekt unterstützt werden, insbesondere wenn der Druckstab 8' in anderen Positionen in die Spannfeder 20' eingesetzt wird, z. B. in eine weiter innen angeordnete Bohrung 46. Der Druckstab 8' ist abgekröpft und an seinem unteren Ende mit einer Biegung versehen, die dem Umfangsprofil des Anpresselementes 7 angepasst ist. Eine zusätzliche Sattelscheibe am unteren Ende des Druckstabes 8' ist bei dieser Bauform nicht erforderlich.

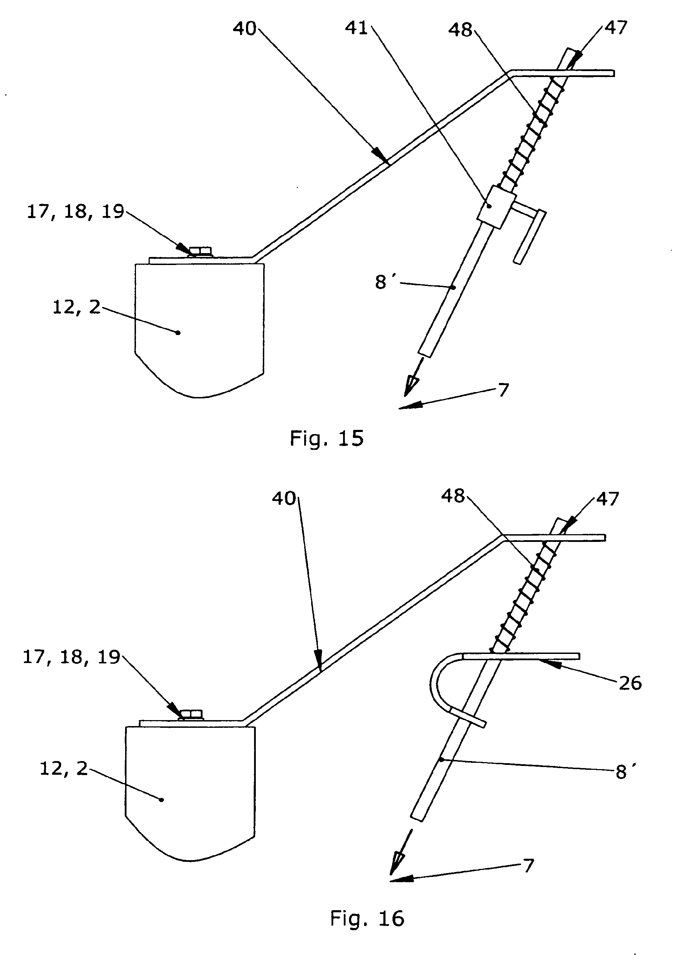

In Fig. 15 ist das Oberteil einer Silowand 2, 12 dargestellt, auf deren oberer Stirnseite ein starrer Arm 40 mittels einer Schraube 17, einer Scheibe 18 bzw. eines Dübels 19 befestigt ist. In eine Bohrung 47 des Armes 40 ist ein Druckstab 8' eingeführt. Die Druckkraft auf das Anpresselement 7 wird mit Hilfe einer Wendelfeder 48 erzeugt, die den Druckstab 8' umgibt und mit ihrer Basis an der Unterseite des freien Endes des Armes 40 anliegt. Das federnde freie Ende der Wendelfeder 48 ist mittels eines Verschiebe- und Feststellgliedes 41 am Druckstab 8' fixiert. Das Verschiebe- und Feststellglied 41 ist als Klemmgesperre ausgebildet, das mittel eines Exzenterhebels oder einer Schraube in unterschiedlichen Längspositionen des Druckstabes 8' verklemmt werden kann.

Die Fig. 16 zeigt das Oberteil einer Silowand 2, 12 mit einem starren Arm 40, der mit einer Schraube 17, einer Scheibe 18 bzw. einem Dübel 19 auf der oberen Stirnseite der Silowand 2, 12 befestigt ist. In eine Bohrung 47 des Armes 40 ist ein Druckstab 8' eingeführt. An der Unterseite des freien Endes des Armes 40 liegt eine Wendelfeder 48 an, die den Druckstab 8' umgibt und an ihrem freien federnden Ende mittels eines Bügels 26 am Druckstab 8' selbsthemmend fixiert ist. Die Funktion dieses Bügels 26 ist anhand von Fig. 13 eingehend erläutert worden. Der Druckstab 8' drückt auf das Anpresselement 7 des abgedeckten Silagestocks.

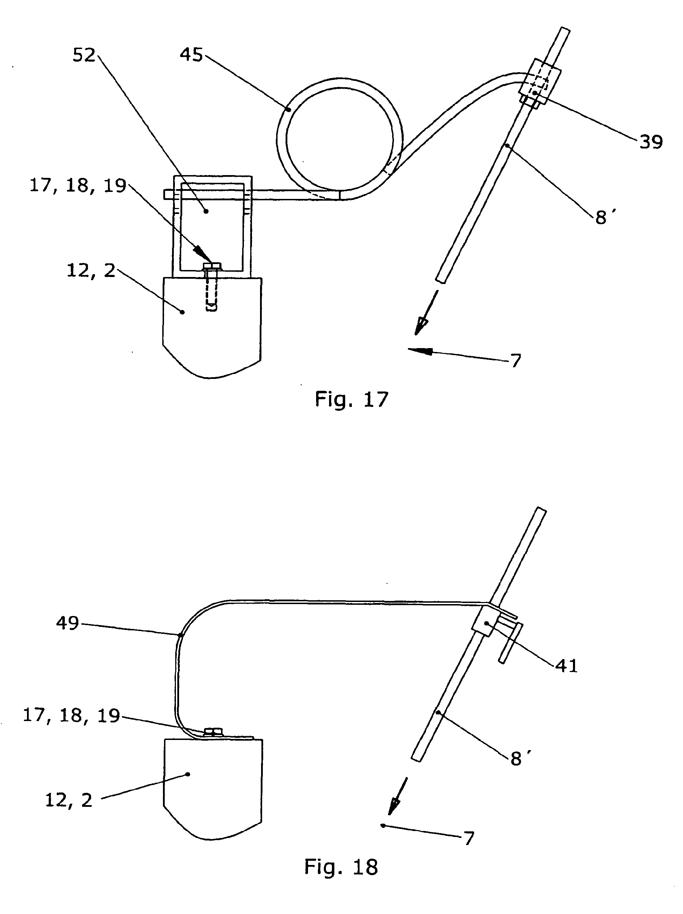

In Fig. 17 ist das Oberteil einer Silowand 2, 12 dargestellt, auf der ein Bügel 52 mittels einer Schraube 17, einer Scheibe 18 bzw. eines Dübels 19 befestigt ist. In den Bügel 52 ist eine Biege- und Torsionsfeder 45 eingespannt, die über ein Verschiebe- und Feststellglied 39 auf einen Druckstab 8' und damit auf das Anpresselement 7 des Silagestockes wirkt. Die Ausbildung und Funktion des Feststellgliedes 39 wurde anhand von Fig. 15 beschrieben.

Die Fig. 18 zeigt eine bogenförmig ausgebildete Blattfeder 49, die auf der oberen Stirnseite einer Silowand 2, 12 verschraubt oder verdübelt ist (Pos. 17, 18, 19). Die Kraftübertragung über einen Druckstab 8' auf das Anpresselement 7 erfolgt über ein Verschiebe- und Feststellglied 41, das anhand der Fig. 15 beschrieben wurde.

## Patentansprüche

1. Vorrichtung für einen Siloverschluss, insbesondere für Flachsilos, zur seitlichen Fixierung einer über einem Silagestock (3) aufbringbaren, aus einer oder mehreren Folienlagen (4, 5, 6) bestehenden luftdichten Abdeckung, mit mehreren mit den Silowänden (2) verbundenen federnden Andrückmechanismen und mehreren, von den Andrückmechanismen jeweils beaufschlagten Druckstäben (8, 8'), die ein Anpresselement (7) auf die Abdeckung drücken, **dadurch gekennzeichnet, dass** die Druckstäbe (8, 8') durch Druckfedern (9, 20, 20', 48) beaufschlagt werden, deren Basis an der Oberseite der Silowände (2, 12) verankert ist und deren federndes Ende in unterschiedlichen Längspositionen an den Druckstäben (8, 8') mittelbar oder unmittelbar festklemmbar ist.

2. Vorrichtung nach Anspruch 1, **dadurch gekennzeichnet, dass** die Druckstäbe (8) als Rippenstäbe ausgebildet sind und in unterschiedlichen Längspositionen unmittelbar in die Federelemente (9, 20) einsetzbar und selbsthemmend festklemmbar sind.

3. Vorrichtung nach Anspruch 2, **dadurch gekennzeichnet, dass** die Druckstäbe (8) auf zwei ihrer gegenüber liegenden Längsseiten mit Rippen (13) versehen sind und durch eine Drehung um 90 Grad um ihre Längsachse an Armen (14) der Federelemente (9) fixierbar sind.

4. Vorrichtung nach Anspruch 1, **dadurch gekennzeichnet, dass** die Druckstäbe als glatte Stäbe (8') ausgebildet sind und in unterschiedlichen Längspositionen unmittelbar in die Federelemente (20, 20') einsetzbar und mittels eines am Druckstab (8') verschiebbaren Bauteiles festklemmbar sind.

5. Vorrichtung nach Anspruch 4, **dadurch gekennzeichnet, dass** das verschiebbare Bauteil aus einem Bügel (26) oder einer Scheibe (30) besteht und an dem Druckstab (8') in unterschiedlichen Längspositionen durch Verkanten selbsthemmend festklemmbar ist.

6. Vorrichtung nach Anspruch 4, **dadurch gekennzeichnet, dass** das verschiebbare Bauteil aus einem als Klemmgesperre ausgebildeten Feststellglied (41) besteht, das an dem Druckstab (8') in unterschiedlichen Längspositionen fixierbar ist.

7. Vorrichtung nach Anspruch 4, **dadurch gekennzeichnet, dass** die Druckstäbe (8') gebogen oder abgekröpft sind und an ihrem der Abdeckung des Silagestockes zugewandten Ende mit einer dem Umfangsprofil des Anpresselementes (7) angepassten Biegung versehen sind.

8. Vorrichtung nach Anspruch 1, **dadurch gekennzeichnet, dass** die Druckfeder als Spannfeder (20, 20', 49) aus Bandstahl ausgebildet ist.

9. Vorrichtung nach Anspruch 1, **dadurch gekennzeichnet, dass** die Druckfeder als doppelschenkelige Torsionsfeder (45) ausgebildet ist.

10. Vorrichtung nach Anspruch 1, **dadurch gekennzeichnet, dass** die Druckfeder als Wendelfeder (48) ausgebildet ist, die den Druckstab (8') umgibt und mit ihrer Basis an einem auf der Oberseite der Silowand befestigten Arm (40) anliegt.

11. Vorrichtung nach Anspruch 1, **dadurch gekennzeichnet, dass** die Druckstäbe (8, 8') ein unmittelbar längs der Silo-Innenwand (2, 12) auf der Abdeckung verlegtes und der Längsverteilung der Druckkräfte dienendes, stab- bzw. rohrförmiges Anpresselement (7) so beaufschlagen, dass dieses mit einer Kraftkomponente auf den Silagestock (3) und mit einer weiteren Kraftkomponente in Richtung der Silo-Innenwand (2, 12) anpressbar ist.

12. Vorrichtung nach Anspruch 2 oder 4, **dadurch gekennzeichnet, dass** am unteren Ende des Druckstabes (8) eine dem Umfangsprofil des Anpresselementes (7) annähernd angepasste Sattelscheibe angebracht ist.

## Claims

1. A device for a hopper gate, particularly for flat silos, in order to laterally fix an air-tight cover that can be placed over a silage level and consists of one or more film layers, with several springable pressing mechanisms that are connected to the silo walls, and with several compression bars that are respectively acted upon by the pressing mechanisms and press a pressing element against the cover, **characterized in that** the compression bars (8, 8') are acted upon by pressure springs (9, 20, 20', 48), the base of which is anchored on the upper side of the silo walls (2, 12) and the springable end of which can be directly or indirectly clamped on the compression bars (8, 8') in different longitudinal positions.

2. The device according to Claim 1, **characterized in that** the compression bars (8) are realized in the form of ribbed bars and can be directly inserted into the spring elements (9, 20) and clamped therein in a self-locking fashion in different longitudinal positions.

3. The device according to Claim 2, **characterized in that** the compression bars (8) are provided with ribs (13) on two of their opposite longitudinal sides and can be fixed on arms (14) of the spring elements (9) by being turned by 90 degrees about their longitudinal axis.

4. The device according to Claim 1, **characterized in that** the compression bars are realized in the form of smooth bars (8') and can be directly inserted into the spring elements (20, 20') and clamped in different longitudinal positions by means of a component that can be displaced on the compression bar (8').

5. The device according to Claim 4, **characterized in that** the displaceable component consists of a strap (26) or a plate (30) and can be clamped in a self-locking fashion on the compression bar (8') in different longitudinal positions by means of jamming.

6. The device according to Claim 4, **characterized in that** the displaceable component consists of a locking element (41) that is realized in the form of a silent ratchet and can be fixed on the compression bar (8') in different longitudinal positions.

7. The device according to Claim 4, **characterized in that** the compression bars (8') are bent or cranked and provided with a bend that is adapted to the circumferential profile of the pressing element (7) on their end that faces the cover of the silage level.

8. The device according to Claim 1, **characterized in that** the pressure spring, is realized in the form of a tension spring (20, 20', 49) of strip steel.

9. The device according to Claim 1, **characterized in that** the pressure spring is realized in the form of a double-limbed torsion spring (45).

10. The device according to Claim 1, **characterized in that** the pressure spring is realized in the form of a spiral coiled spring (48) that surrounds the compression bar (8') and abuts an arm (40) fixed on the upper side of the silo wall with its base..

11. The device according to Claim 1, **characterized in that** the compression bars (8, 8') act upon a rod-shaped or tube-shaped pressing element (7) that is installed directly on the cover along the inner silo wall (2, 12) and serves for the longitudinal distribution of the compressive forces in such a way that it can be pressed against the silage level (3) with one component force and in the direction of the inner silo wall (2, 12) with another component force.

12. The device according to Claim 2 or 4, **characterized in that** a saddle plate arranged on the lower end of the compression bar (8) is approximately adapted to the circumferential, profile of the pressing element (7).

## Revendications

1. Dispositif pour fermeture de silo, notamment pour silos plats, pour la fixation latérale d'un recouvrement hermétique à l'air pouvant être appliqué sur un stock d'ensilage et composé d'une ou plusieurs épaisseurs de film, comportant plusieurs mécanismes de compression reliés aux parois du silo et plusieurs barres de compression respectivement sollicitées par les mécanismes de compression et qui compriment un élément de compression sur le recouvrement, **caractérisé, en ce que** les barres de compression (8, 8') sont sollicitées par des ressorts de compression (9, 20, 20', 48) dont la base est ancrée sur la face supérieure des parois du silo (2, 12) et dont l'extrémité résiliente peut être bloquée directement ou indirectement dans différentes positions longitudinales sur les barres de compression (8, 8').

2. Dispositif selon la revendication 1, **caractérisé en ce que** les barres de compression (8) sont réalisées sous forme de barres rainurées et peuvent être insérées et fixées directement de manière autobloquante dans différentes positions longitudinales dans les éléments à ressort (9, 20).

3. Dispositif selon la revendication 2, **caractérisé en ce que** les barres de compression, (8) sont pourvues sur deux de leurs faces longitudinales opposées de rainures (13) et peuvent être fixées par une rotation de 90 degrés autour de leur axe longitudinal sur des bras (14) des éléments à ressort (9, 20).

4. Dispositif selon la revendication 1, **caractérisé en ce que** les barres de compression (8) sont réalisées sous forme de barres lisses (8') et peuvent être insérées dans différentes positions longitudinales directement dans les éléments à ressort (20, 20') et bloquées au moyen d'une composante déplaçable sur la barre de compression (8').

5. Dispositif selon la revendication 4, **caractérisé en ce que** la composante déplaçable est composée d'un étrier (26) ou d'un disque (30) et peut être bloquée de manière autobloquante sur la barre de compression (8') dans différentes positions longitudinales en l'inclinant.

6. Dispositif selon la revendication 4, **caractérisé en ce que** la composante déplaçable est composée d'un élément de fixation (41) réalisé sous forme d'arrêt qui peut être fixé sur la barre de compression (8') dans différentes positions longitudinales.

7. Dispositif selon la revendication 4, **caractérisé en ce que** les barres de compression (8') sont courbées ou coudées et sont pourvues à leur extrémité tournée vers le recouvrement du stock d'ensilage d'une courbure adaptée au profil circonférentiel de l'élément de compression (7).

8. Dispositif selon la revendication 1, **caractérisé en ce que** le ressort de compression est réalisé sous forme d' un ressort tendeur (20, 20', 49) en bande d'acier.

9. Dispositif selon la revendication 1, **caractérisé en ce que** le ressort de compression est réalisé sous forme d'un ressort à torsion à double branche (45).

10. Dispositif selon la revendication 1, **caractérisé en ce que** le ressort de compression est réalisé sous forme d' un ressort à boudin. (48) entourant la barre de compression (8') et reposant par sa base sur un bras (40) fixé sur la face supérieure de la paroi du silo.
